# EUROPÄISCHE PATENTSCHRIFT

(11) **EP 1 108 268 B1**
(45) Veröffentlichungstag und Bekanntmachung des Hinweises auf die Patenterteilung: **19.03.2003**
(21) Anmeldenummer: 99952306.1
(22) Anmeldetag: 06.08.1999
(51) Int. Cl.: H01M 2/00

(54) **VORRICHTUNG UND VERFAHREN ZUR NUTZUNG DER ABWÄRME EINER LUFTGEKÜHLTEN BRENNSTOFFZELLENBATTERIE**
DEVICE AND METHOD FOR USING THE WASTE HEAT OF AN AIR-COOLED FUEL CELL BATTERY
DISPOSITIF ET PROCEDE D'UTILISATION DE LA CHALEUR PERDUE D'UNE BATTERIE DE PILES A COMBUSTIBLE REFROIDIE PAR AIR

(30) Priorität: 10.08.1998 DE 19836143
(43) Veröffentlichungstag der Anmeldung: 20.06.2001
(73) Patentinhaber: SIEMENS AKTIENGESELLSCHAFT, 80333 München (DE)
(72) Erfinder: BUCHNER, Peter, D-91332 Heiligenstadt (DE); VON HELMOLT, Rittmar, D-91052 Erlangen (DE)
(86) Internationale Anmeldenummer: DE9902449
(87) Internationale Veröffentlichungsnummer: WO00010209

(56) Entgegenhaltungen:
- DE-A- 19 629 084
- FR-A- 1 557 731
- US-A- 3 061 658
- US-A- 4 640 873
- US-A- 5 647 534
- PATENT ABSTRACTS OF JAPAN vol. 011, no. 092 (E-491), 24. März 1987 (1987-03-24) -& JP 61 243662 A (SANYO ELECTRIC CO LTD), 29. Oktober 1986 (1986-10-29)
- PATENT ABSTRACTS OF JAPAN vol. 012, no. 030 (E-578), 28. Januar 1988 (1988-01-28) -& JP 62 188178 A (SANYO ELECTRIC CO LTD), 17. August 1987 (1987-08-17)
- PATENT ABSTRACTS OF JAPAN vol. 1999, no. 01, 29. Januar 1999 (1999-01-29) -& JP 10 284107 A (SANYO ELECTRIC CO LTD), 23. Oktober 1998 (1998-10-23)
- PATENT ABSTRACTS OF JAPAN vol. 018, no. 658 (E-1643), 13. Dezember 1994 (1994-12-13) -& JP 06 260200 A (MITSUBISHI HEAVY IND LTD), 16. September 1994 (1994-09-16)
- PATENT ABSTRACTS OF JAPAN vol. 008, no. 088 (E-240), 21. April 1984 (1984-04-21) -& JP 59 009869 A (SANYO DENKI KK), 19. Januar 1984 (1984-01-19)
- PATENT ABSTRACTS OF JAPAN vol. 006, no. 259 (E-149), 17. Dezember 1982 (1982-12-17) -& JP 57 157470 A (SANYO DENKI KK), 29. September 1982 (1982-09-29)
- PATENT ABSTRACTS OF JAPAN vol. 016, no. 300 (E-1227), 2. Juli 1992 (1992-07-02) -& JP 04 082167 A (MITSUBISHI ELECTRIC CORP), 16. März 1992 (1992-03-16)

## Beschreibung

Die Erfindung betrifft eine Vorrichtung zur Nutzung der Abwärme einer luftgekühlten Brennstoffzelle mit einer Wärmetauscherzelle. Daneben bezieht sich die Erfindung auch auf ein Verfahren zur Nutzbarmachung der Abwärme einer Brennstoffzellen(=BZ)-Batterie mit einem Stapel von Brennstoffzellen.

Die DE 44 42 285 Cl beschreibt eine luftgekühlte PEM(Polymer-Elektrolyt-Membran)-Brennstoffzelle, die eine negative Polplatte, eine negative Elektrode, eine Membran, eine positive Elektrode und eine positive Polplatte beinhaltet, wobei die beiden Polplatten (oder: Separatorplatten) mit der Membran durch ein Rahmenelement mechanisch fest, gasdicht und elektronisch isolierend verbunden sind. Um die Membran vor dem Austrocknen zu bewahren, werden die zugeführten Prozeßgase zumindest teilweise befeuchtet. Dazu werden die Prozeßgase durch einen Befeuchter, z.B. einen Membranbefeuchter, geleitet, in dem ihnen verdampftes Wasser zugesetzt wird.

Bei flüssigkeitsgekühlten Brennstoffzellen werden die Befeuchter von der verbrauchten Kühlflüssigkeit durchflossen und dadurch aüfgeheizt. Die Auskopplung der Wärme aus Kühlluft ist jedoch aufwendiger und bislang gibt es keine geeigneten Wärmetauscher, die die zur Verdampfung notwendige Wärme aus der verbrauchten Kühlluft zugänglich machen. Deshalb muß bei luftgekühlten Brennstoffzellen diese Verdampfungsenergie bisher extern aufgebracht werden.

Aus der JP 61-243662 A ist es bekannt, einen kompletten Brennstoffzellenstapel blockweise durch dazwischenliegende Stapel von Wärmeaustauschern luftzukühlen. Daneben wird in der JP 10-284107 ein Brennstoffzellenstapel mit Wärmeaustauschern beschrieben, die sich unmittelbar an den Stapel anschließen. Schließlich werden in der JP 57-157470 A Kühlplatten zur Verwendung in einem Brennstoffzellenstapel vorgeschlagen, wobei die Kühlplatten in den Brennstoffzellen-Stapel integriert werden. Im Allgemeinen sind dafür Trennwände in den Wärmetauschern vorgesehen.

Aufgabe vorliegender Erfindung ist es demgegenüber, eine Vorrichtung und ein Verfahren zu schaffen, durch welche die Abwärme einer luftgekühlten PEM-Brennstoffzelle besser nutzbar gemacht werden kann.

Diese Aufgabe wird gelöst durch die Wärmetauscherzelle nach Anspruch 1 und das Verfahren nach Anspruch 4. Ausgestaltungen der Erfindung ergeben sich aus den Unteransprüchen, der Beschreibung, den Figuren und den Erläuterungen dazu.

Bei der Erfindung ist ein Befeuchter, durch den die Prozeßgase oder ein Prozeßgas für die BZ-Batterie geleitet werden, in eine Wärmetauscherzelle integriert. Dabei ist jede Wärmetauscherzelle so aufgebaut, daß eine erste Separatorplatte mit der wärmeleitfähigen Kontaktplatte einen Gasraum umschließt, in dem die verbrauchte Kühlluft aus dem BZ-Stapel geführt wird und eine zweite Separatorplatte mit der Kontaktplatte einen zweiten Raum umschließt, in dem mittig eine Befeuchtermembran angeordnet ist. Die Befeuchtermembran definiert mit der Kontaktplatte den Raum, in dem das Wasser zur Befeuchtung über die Kontaktplatte mit der Abwärme des BZ-Stapels erhitzt wird, und begrenzt mit der Separatorplatte den Raum, in dem das zu befeuchtende Prozeßgas geführt wird.

Beim erfindungsgemäßen Verfahren zur Nutzung der Abwärme einer luftgekühlten Brennstoffzellenbatterie, bei dem die verbrauchte Kühlluft durch einen Stapel von Wärmetauscherzellen geleitet wird und dabei ihre Wärme abgibt. Dabei ist vorteilhaft, wenn die Wärmetauscherzelle zur Nutzung der Abwärme direkt an die BZ-Batterie anschließt, so daß keine Wärme über Zwischenleitungen verlorengeht.

Weitere Einzelheiten und Vorteile der Erfindung ergeben sich aus der Figurenbeschreibung von Beispielen der Zeichnung in Verbindung mit den Unteransprüchen. Es zeigen in schematischer Vereinfachung
- Figur 1: einen schematischen Querschnitt durch eine bekannte Wärmetauscherzelle,
- Figur 2: einen schematischen Querschnitt durch eine erfindungsgemäße Wärmetauscherzelle und
- Figur 3: eine perspektivische Ansicht einer Anordnung aus einem Brennstoffzellenstapel mit anschließendem Wärmetauscherzellenstapel.

Als Wärmetauscherzelle wird eine Zelle bezeichnet, die zumindest zwei Separatorplatten und eine wärmeleitfähige Kontaktplatte umfaßte Diese drei Platten sind z.B. durch Filterpressentechnik, durch seitliche Klammerung, durch einen Falz, durch Löten, oder durch Verkleben verbunden. Die beiden Separatorplatten sind bevorzugt aus billigem, leichtem und wärmeleitfähigem Material, z.B. Kunststoff oder Metall, aus dem sie massenfertigungstauglich und kostengünstig herstellbar ist. Bevorzugt haben die Separatorplatten Verteilungskanäle wie die entsprechenden Pol- oder Separatorplatten der Brennstoffzelle, damit eine möglichst große Oberfläche zur Wärmeabgabe zur Verfügung steht. Die wärmeleitfähige Kontaktplatte sollte ebenso geprägt und/oder geformt und auch wieder aus möglichst billigem und leichtem Material sein, dessen Wärmeleitfähigkeit direkt die Effizienz und den energetischen Nutzen der Erfindung mitbestimmt. Die Verteilungskanäle sind z.B. Rillen und/oder Nuten, die bevorzugt in die Platten eingeprägt sind.

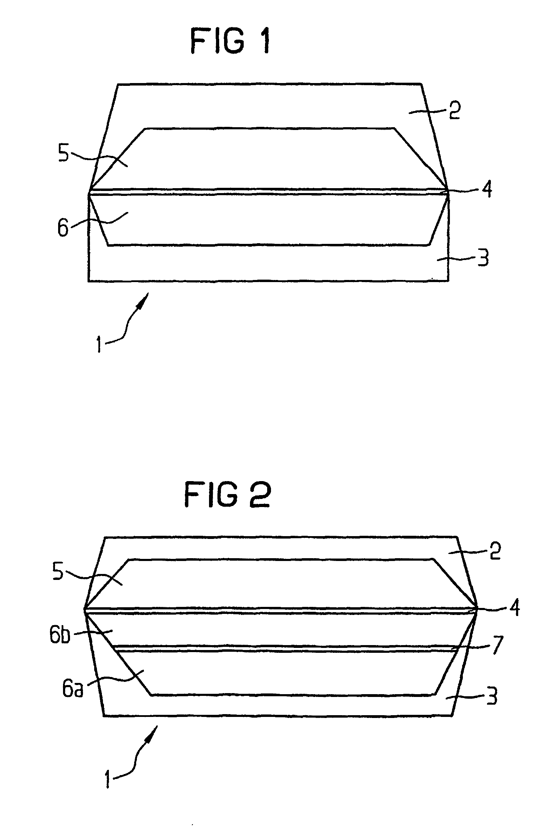

In Figur 1 ist die einfachste Form der Wärmetauscherzelle 1 im Querschnitt gezeigt: Oben und unten jeweils eine Separatorplatte 2, 3 und in der Mitte die wärmeleitfähige Kontaktplatte 4. Auf die Darstellung der bevorzugt auch vorhandenen Verteilungskanäle wurde der Einfachheit halber verzichtet. Die Separatorplatte 2 umschließt mit der Kontaktplatte 4 einen Raum 5, durch den die verbrauchte Kühlluft geleitet wird. Dadurch erwärmt sich die Kontaktplatte 4 auch auf der Seite, die in den Raum 6 zeigt und den die Kontaktplatte mit der Separatorplatte 3 umschließt. Im Raum 6 befindet sich das zu erwärmende Medium, z.B. die Fahrgastinnenraumluft eines mit PEM-Brennstoffzellen angetriebenes Fahrzeugs. Zur Beheizung des Fahrgastinnenraumes bei diesen Fahrzeugen kann aus Sicherheitsgründen nicht direkt die verbrauchte Kühlluft genommen werden.

Bevorzugt werden mehrere Wärmetauscherzellen zu einem Stapel zusammengefaßt (z.B. mittels Filterpressentechnik und/oder gelötet), der direkt an den Brennstoffzellenstapel anschließt. Dann grenzt die obere Seite der Separatorplatte 2 wieder an einen dem Raum 6 entsprechenden Raum der oberen Wärmetauscherzelle. Dabei wird die Separatorplatte 2 bevorzugt auch aus wärmeleitfähigem Material sein, damit auch ein Wärmeübergang von der Separatorplatte 2 auf das zu erwärmende Medium stattfinden kann. In diesem Fall sind bevorzugt beide Seiten der Separatorplatten mit Verteilungskanälen versehen, so daß eventuell eine wellblechartige Struktur vorteilhaft sein kann. Die Randabdichtungen und die Leitungen sind unkritisch, solange die diversen Gas- und Medienräume ausreichend dicht voneinander getrennt sind.

Die Kontaktplatte 4 ist bevorzugt immer beidseitig mit Verteilungskanälen versehen. Das zu erwärmende Medium ist bevorzugt Luft oder Wasser (z.B. als stationäre Anwendung zur Erwärmung von Brauchwasser) oder eine sonstige Flüssigkeit. Die Wärmetauscherzelle kann aber auch zur Erwärmung x-beliebiger Medien genutzt werden.

In Figur 2 ist wieder ein schematischer Querschnitt durch eine Wärmetauscherzelle zu sehen. Oben erkennt man wieder die Separatorplatte 2, die mit der Kontaktplatte 4 den Raum 5 umschließt in dem die verbrauchte Kühlluft geführt wird. Der Raum 6, den die Kontaktplatte mit der unteren Separatorplatte 3 umschließt, ist bei dieser Ausgestaltung der Erfindung, bei der die verbrauchte Kühlluft zur Heizung des Befeuchters genutzt wird, durch eine Befeuchtermembran 7 unterteilt. Oberhalb der Befeuchtermembran 7, im Raum 6b, fließt das Wasser, das erhitzt werden soll und unterhalb der Befeuchtermembran 7, im Raum 6a strömt das Prozeßgas, das befeuchtet werden soll.

Die Befeuchtermembran ist aus wasserpermeablem Kunststoff oder aus einem anderen wasserleitenden Material. Sie kann natürlich auch identisch mit der protonenleitenden Membran aus der Brennstoffzelle sein.

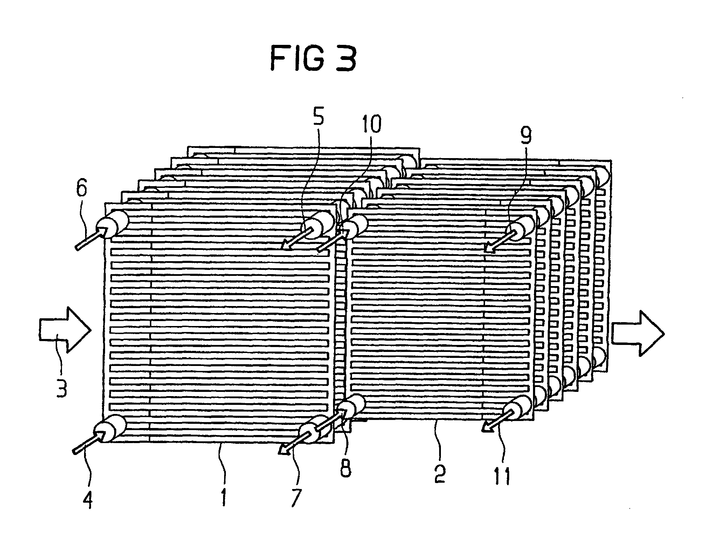

In Figur 3 wird eine Anordnung eines Brennstoffzellenstapels mit angrenzendem Wärmetauscherzellenstapel gezeigt. Links im Bild ist der Brennstoffzellenstapel 1, der nach dem Stand der Technik aufgebaut ist und an seiner gezeigten vorderen Endplatte die Prozeßgasein- und Auslässe (4,5,6 und 7) hat. Mit den Pfeilen angedeutet ist jeweils die Richtung, in der das Prozeßgas (Oxidans und/oder Brennstoff) strömt, so daß zu erkennen ist, ob es sich um einen Gasein- oder aulaß handelt.

Mit dem Pfeil 3 wird die Richtung gezeigt in der die Kühlluft die beiden Stapel 1 und 2 durchströmt, wobei sie im Brennstoffzellenstapel 1 erwärmt wird und diese Wärme im Wärmetauscherzellenstapel 2 wieder abgibt.

Angrenzend an den Brennstoffzellenstapel 1 ist der Wärmetauscherzellenstapel 2 angeordnet. Er ist konstruktiv mit dem BZ-Stapel fast identisch, nur daß wesentliche Vereinfachungen und Verbilligungen bzgl. Isolation, elektrischer Leitfähigkeit, Anforderungen an das Material (Korrosionsbeständigkeit, etc) möglich sind, ohne seine Funktionalität zu beeinträchtigen. Der Wärmetauscherzellenstapel 2 hat auch an seiner gezeigten Endplatte Ein- und Auslässe. Für die gezeigte Ausführungsform, bei der die Wärmetauscherzellen in einen Befeuchter integriert sind, ist 8 der Einlaß des trockenen Prozeßgases, 9 der Auslaß des befeuchteten Prozeßgases, 10 der Einlaß des Befeuchtungswassers und 11 der Auslaß des Befeuchtungswassers.

## Patentansprüche

1. Vorrichtung zur Nutzung der Abwärme einer luftgekühlten Brennstoffzelle, mit einer Wärmetauscherzelle, die zumindest zwei End- oder Separatorplatten (2, 3) und eine wärmeleitfähige Platte (4) umfasst, die zwei Räume (5, 6) umschließen, wobei im Betrieb sich in dem einen Raum (5) die verbrauchte Kühlluft und in dem anderen Raum (6) wenigstens ein Medium, das die Wärme aufnehmen kann, befinden und wobei in dem zweiten Raum (6) eine Befeuchtermembran (7) vorhanden ist, die den zweiten Raum (6) in zwei Teilräume (6a, 6b) unterteilt, wobei sich in dem einen Teilraum (6a) Wasser und in dem anderen Teilraum (6b) zu befeuchtendes Prozessgas befinden.

2. Vorrichtung nach Anspruch 1, bei dem sich die Wärmetauscherzelle (2) direkt an die Brennstoffzelle (1) anschließt.

3. Verfahren zur Nutzbarmachung der Abwärme einer luftgekühlten Brennstoffzellenbatterie mit einem Stapel von Brennstoffzellen, unter Verwendung einer Vorrichtung gemäß Anspruch 1 oder Anspruch 2, wobei die verbrauchte Kühlluft durch einen Stapel von Wärmetauscherzellen geleitet wird und dabei ihre Wärme an Wasser einerseits und Prozessgas andererseits abgibt.

4. Verfahren nach Anspruch 3, bei dem die Anzahl der Wärmetauscherzellen im Wärmeaustauscherzellenstapel gleich der Anzahl an Brennstoffzellen im Brennstoffzellenstapel gewählt wird.

## Claims

1. Apparatus for utilizing the waste heat of an air-cooled fuel cell, having a heat exchange cell, which comprises at least two end or separator plates (2, 3) and a thermally conductive plate (4), which surround two spaces (5, 6), in which, during operation, the spent cooling air is present in one space (5) and at least one medium capable of absorbing the heat is present in the other space (6), and in which a humidifier membrane (7), which divides the second space (6) into two partial spaces (6a, 6b), is present in the second space (6), water being present in one partial space (6a) and process gas which is to be humidified being present in the other partial space (6b).

2. Apparatus according to Claim 1, in which the heat exchange cell (2) directly adjoins the fuel cell (1).

3. Method of rendering utilizable the waste heat of an air-cooled fuel cell battery having a stack of fuel cells, using an apparatus according to Claim 1 or Claim 2, in which the spent cooling air is passed through a stack of heat exchange cells and in the process gives off its heat to water on one side and process gas on the other side.

4. Method according to Claim 3, in which the number of heat exchange cells in the heat exchange cell stack is identical to the number of fuel cells in the fuel cell stack.

## Revendications

1. Dispositif pour tirer parti de la chaleur perdue d'une pile à combustible à refroidissement par de l'air, comprenant une pile formant échangeur de chaleur qui comprend au moins deux plaques (2, 3) d'extrémité ou de séparateur et une plaque (4) conductrice de la chaleur qui entourent deux chambres (5, 6), l'air de refroidissement usé se trouvant en fonctionnement dans l'une des chambres (5) et au moins un fluide qui peut absorber la chaleur se trouvant en fonctionnement dans l'autre chambre (6), et une membrane (7) formant humidificateur étant présente dans la deuxième chambre (6) et subdivisant la deuxième chambre (6) en deux sous-chambres (6a, 6b), de l'eau se trouvant dans l'une des sous-chambres (6a) et du gaz de processus à humidifier dans l'autre sous-chambre (6b).

2. Dispositif suivant la revendication 1, dans lequel la pile (2) formant échangeur de chaleur se raccorde directement à la pile (1) à combustible.

3. Procédé pour tirer profit de la chaleur perdue d'une batterie de piles à combustible à refroidissement par de l'air comprenant un empilement de piles à combustible en utilisant un dispositif suivant la revendication 1 ou suivant la revendication 2, dans lequel on envoie l'air de refroidissement usé dans un empilement de piles formant échangeur de chaleur et on lui fait ainsi céder sa chaleur à de l'eau, d'une part, et à du gaz de processus, d'autre part.

4. Procédé suivant la revendication 3, dans lequel le nombre des piles formant échangeur de chaleur dans l'empilement de piles formant échangeur de chaleur est égal au nombre de piles à combustible dans l'empilement de piles à combustible.
